Europäisches Patentamt

European Patent Office

Office européen des brevets

(11) Publication number: **0 090 077 B1**

(12) **EUROPEAN PATENT SPECIFICATION**

(45) Date of publication of patent specification: **12.10.88**

(51) Int. Cl.⁴: **B 29 C 67/00, B 29 C 45/56**

(21) Application number: **82110353.8**

(22) Date of filing: **10.11.82**

(54) A process for forming a polymer of high mechanical properties.

(30) Priority: **29.03.82 US 363355**

(43) Date of publication of application:
**05.10.83 Bulletin 83/40**

(45) Publication of the grant of the patent:
**12.10.88 Bulletin 88/41**

(84) Designated Contracting States:
**DE FR GB**

(56) References cited:
**GB-A-1 074 395**
**US-A-3 907 952**
**US-A-4 288 478**

**JOURNAL OF POLYMER SCIENCE, vol. 14, 1976, pages 2043-2058, Polymer Chemistry Edition, John Wiley, New York, US; W.J. JACKSON et al.: "Liquid crystal polymers. I. Preparation and properties p-hydroxybenzoic acid copolyesters"**

(73) Proprietor: **International Business Machines Corporation**
**Old Orchard Road**
**Armonk, N.Y. 10504 (US)**

(72) Inventor: **Economy, James**
**6694 Heathfield Drive**
**San Jose California 95120 (US)**
Inventor: **Zachariades, Efstathios Anagnostis**
**745 Jacaranda Circle**
**Hillsborough California 94010 (US)**

(74) Representative: **Burt, Roger James, Dr.**
**IBM United Kingdom Limited Intellectual Property Department Hursley Park**
**Winchester Hampshire SO21 2JN (GB)**

(56) References cited:
**KUNSTSTOFFE, vol. 73, no. 9, pages 524-528, Münich, DE; J.H. WENDORFF: "Flüssig-kristalline Kunststoffe-Struktur und Eigenschaften"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for producing multiaxially oriented polymers with ultra-high planar mechanical and impact properties by operating below the isotropic crystalline melting point.

US—A—2,372,177, US—A—3,356,242, US—A—3,647,614, US—A—3,907,952 and US—A—4,288,478 disclose the application of rotary force during the moulding of a polymer to minimize directional weakness. The polymers are all in the melt state, in sharp and clear distinction to the present invention, wherein the polymer is processed at a temperature below its isotropic crystalline melting point under the combined effects of compression and rotation.

GB—A—1,074,395 discloses a process for the strengthening of a thermoplastic synthetic polymeric material which is essentially crystalline and which is capable of being strengthened by shearing, the process being characterised in that the material is subjected to a plurality of shearing forces which are parallel to each other at any point in the material at a temperature which is below the crystalline melting point of the material, so that in the material perpendicular to the direction of the forces, macro-molecules originally adjacent to each other are displaced with respect to each other in paths extending parallel to the line of the forces, and so that the thickness of the material perpendicularly to the line of the forces is not substantially reduced.

Formation of fibres through the application of tensile or compressive force during the solid state deformation (drawing and extrusion) of a polymer to achieve high modulus in one direction only is also well known. The known processes have not successfully achieved the developement of a homogeneous composition with ultra-high mechanical performance in more than one direction. The only available technique is through the use of fibre reinforced composites which require expensive and time consuming lay-up techniques. In the present invention an approach is described to achieve ultra-high mechanical performance in the planar isotropic directions. By this technique flat shapes disks, cylinders etc. can be formed with planar mechanical properties far superior to values obtaine with typical engineering plastics.

According to the present invention there is provided a process for forming a polymer having a crystalline form of high mechanical properties, said process comprising subjecting the polymer to a compressive force and a rotational force perpendicular to the compressive force in a contained geometry characterised in that the process is performed at a temperature near to but below the isotropic crystalline melting point of the polymer such that the orientation of the polymer chain has planar orientation consisting of radial and circumferential elements.

The polymer may be processed in the crystalline or liquid crystalline phase by subjecting it to rotational shear deformation within a confined space under compression at a temperature near to but below the isotropic crystalline melting point of the polymer. It should be emphasized that the crystalline state must be present during the compression/rotation process. By this technique the orientation of the chains can be controlled to resemble a cross ply laminated structure. As a result, the mechanical properties such as tensile modulus are dramatically increased in the plane of rotation. By proper control of the compressive and rotational forces, it should be possible by this invention to increase or decrease the planar mechanical properties as compared to the transverse properties. Another feature of this invention relates to the unique orientations that one can achieve in the polymer morphology. For example, in injection moulding a disk using a center gate radial orientation is obtained which, when compared with the circumferential orientation arriving from the compressive/rotation process will produce controlled ultra-high planar mechanical properties. In this work samples have been formed with thickness from 0,0762 mm (3 mils) to 3,18 mm (1/8 inch) which indictes considerable versatility in processing a wide range of thicknesses and shapes.

In carrying out the process of the present invention, the polymer is in a closed geometry under pressure, as for example in injection moulding, compression moulding or extrusion with a rotating conical die or variation thereof. The critical feature is that both compression and rotation are being applied to obtain multiaxially oriented polymers.

The process of the present invention allows for

(a) achievement of controlled ultra-high planar tensile modulus and strength;

(b) achievement of ultra-high flexular modulus;

(c) achievement of high impact strength; and

(d) the generation of controlled multiaxial orientation the sample thickness without the need of fibre reinforcement.

These features may be obtained by processing the polymer is a contained geometry by rotation under compression at a temperature near to but below the isotropic crystalline melting point of the polymer.

The present invention is understood to be applicable to all polymers which can form a semicrystalline or liquid crystalline phase and is not limited to the examples indicated. Furthermore, this invention includes within its scope said polymers containing commonly used fillers.

To better illustrate the flow profiles and nature of the contained geometries, the following drawings have been provided.

Figures 1a, 1B and 1C show surface profiles. Figure 1A is in the case of conventional injection moulding; Figure 1B is in the case of rotational compression moulding; and Figure 1C is a case of rotational injection moulding.

Figures 2A and 2B show the bulk flow and correspond respectively to Figures 1B and 1C.

Figures 3A and 3B illustrate two types of con-

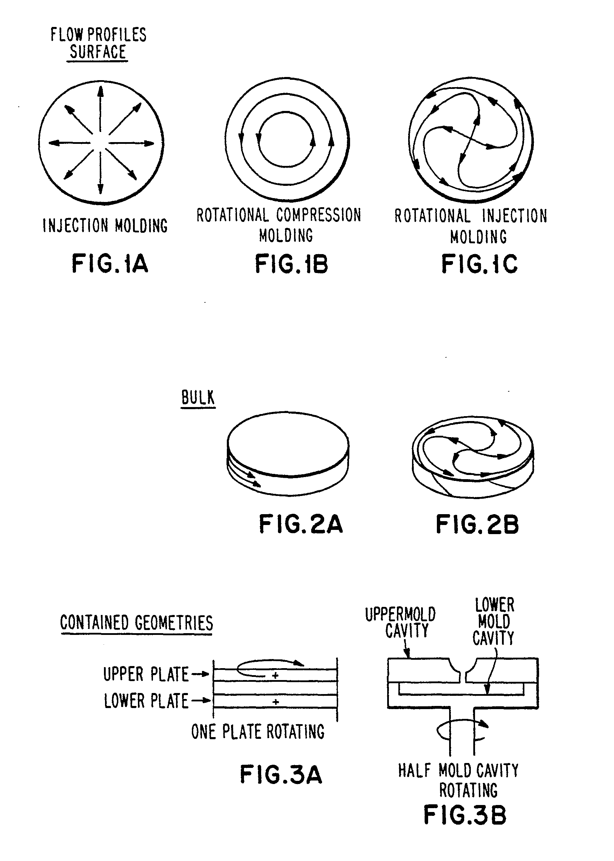

tained geometries. Figure 3A shows the case of one plate rotating, while 3B shows a half mould cavity rotating.

In rotational compression, as the polymer is oriented by controlling the temperature and pressure conditions, it crystallizes along the circular direction and tangentially to the radius of the disk. This kind of crystallization results in chain extension along the circular flow lines. The velocity profile across the surface may vary and depends on the pressure, temperature and shear rate. The technique has been demonstrated with aliphatic and aromatic polymers. Although extensive chain crystalline extension may be achieved with aliphatic polymers, the mechanical performance may be improved dramatically by processing also polymers with inherent chain stiffness.

The key features of our process under rotational compression conditions are: a) Adjustable pressure, temperature and torque conditions; b) Adjustable geometrical configuration to allow for the preparation of different shapes; c) adjustable flow profiles to make orientation and consequently the mechanical performance beneficial in more than one direction.

We have demonstrated the effectiveness of rotational compression to produce multiaxially oriented polymer morphologies with a high degree of chain extension and high ·planar mechanical performance with high density polyethylene, polypropylene and polyethylene terephthalate/poly-p-hydrobenzic acid copolymers. The processed specimens were highly birefringent.

The process has been demonstrated with polymers displaying semicrystalline or liquid crystalline character using moulds in which one-half of the mould cavity could rotate under compression when the polymer was subjected to a temperature near but below its isotropic melting point.

Examples

1. High density polyethylene samples prepared by rotational injection moulding (injection pressure $4,1 \times 10^4 Nm^{-2}$ ($6 \times 10^3 psi$), mould temperature 130°C, rotation 80 rpm for 10 seconds) had a tensile modulus and strength along the planar flow lines of 10GPa and 0.15—0.2GPa respectively i.e. a factor of 10 times higher than the values of the isotropic product. The flexural modulus was 12GPa. The impact strength increased dramatically also. The product of rotational injection moulding had an inpact strength of 1340—1430 gcm (7.5—8 lbs inches) (determined by a falling steel ball) or about 8 times higher than the value of a conventionally moulded sample. Similarly the impact strength of polypropylene samples prouduced uner rotational injection moulding conditions (Injection Pressure $6,9 \times 10^4$ $Nm^{-2}$ ($10 \times 10^3 psi$), Mould Temperature 60°C, rotation 80 rpm for 5 seconds) had an impact strength of 875 g cm (10.5 lbs) i.e. 10 times higher than the value of the conventionally moulded sample. Also, the flexual modulus increased by a factor of 5 from a value of 1GPa to 4.8GPa.

2. For the copolymer of poly(ethylene terephthalate) and 80 mole% p-hydroxybenzoic acid, the product of rotational compression (compression 5 atmoshperes, rotation 28 rpm for 15 seconds and temperature about 270°C) had a tensile modulus along the planar flow lines of about 20GPa as compared to only 3GPa for the isotropic moulded material.

## Claims

1. A process for forming a polymer having a crystalline form of high mechanical properties, said process comprising subjecting the polymer to a compressive force and a rotational force perpendicular to the compressive force in a contained geometry characterised in that the process is performed at a temperature near to but below the isotropic crystalline melting point of the polmer such that the orientation of the polymer chain has planar orientation consisting of radial and circumferential elements.

2. A process as claimed in claim 1, in which the polymer is formed into shapes with ultra-high tensile properties in the planar direction.

3. A process as claimed in claim 1, in which the polymer is a liquid-crystal.

4. A process as claimed in claim 1, in which the polymer is semicrystalline.

5. A process as claimed in claim 1, in which the polymer is linear polyethylene.

6. A process as claimed in claim 1, in which the polymer is linear polypropylene.

7. A process as claimed in claim 1, in which the polymer is a copolyester of *p*-hydroxy-benzoic acid which displays liquid crystalline character.

## ·Patentansprüche

1. Verfahren zu Ausbildung eines Polymers mit einer kristallinen Form erstklassiger mechanischer Eigenschaften, wobei das Verfahren umfaßt, daß das Polymer einer Druckkraft und einer zur Druckkraft senkrechten Rotationskraft in einer eingeschlossenen Geometrie unterworfen wird, dadurch gekennzeichnet, daß das Verfahren bei einer Temperatur nahe, aber unter dem isotropen kristallinen Schmelzpunkt de Polymers so durchgeführt wird, daß die Orientierung der Polymerkette planare Orientierung bestehend aus radialen und Umfangselementen hat.

2. Verfahren nach Anspruch 1, bei welchem das Polymer in Gestalten mit ultrahohen Zugfestigkeitseigenschaften in der planaren Richtung ausgebildet wird.

3. Verfahren nach Anspruch 1, bei welchem das Polymer ein Flüssigkristall ist.

4. Verfahren nach Anspruch 1, bei welchem das Polymer semikristallin ist.

5. Verfahren nach Anspruch 1, bei welchem das Polymer lineares Polyethylen ist.

6. Verfahren nach Anspruch 1, bei welchem das polymer lineares Polypropylen ist.

7. Verfahren nach Anspruch 1, bei welchem das Polymer ein Copolyester von p-Hydroxybenzoesäure ist, welcher Flüssigkristallcharakter zeigt.

**Revendications**

1. Procédé pour former un polymère ayant une forme cristalline, de propriétés mécaniques élevées, ledit procédé comprenant les phases consistant à soumettre le polymère à une force de compression et à une force de rotation perpendiculairement à la force de compression dans une forme géométrique confinée. caractérisé en ce que le procédé est mis en oeuvre sous une température voisine du point de fusion cristalline isotropique du polymère mais inférieure à ce point de telle sorte que l'orientation de la chaîne polymère présente une orientation planaire consistant en éléments radiaux et circonférentiels.

2. Procédé suivant la revendication 1, dans lequel le polymère est formé en des formes ayant des propriétés de traction extrêmement élevées dans la direction planaire.

3. Procédé suivant la revendication 1, dans lequel le polymère est un cristal liquide.

4. Procédé suivant la revendication 1, dans lequel le polymère semi-cristallin.

5. Procédé suivant la revendication 1, dans lequel le polymère est une polyéthylène linéaire.

6. Procédé suivant la revendication 1, dans lequel le polymère est un polypropylène linéaire.

7. Procédé suivant la revendication 1, dans lequel le polymère est un copolyester d'acide p-hydroxy-benzoïque qui montre un caractère cris-tallin liquide.

FLOW PROFILES
SURFACE

INJECTION MOLDING

**FIG. 1A**

ROTATIONAL COMPRESSION
MOLDING

**FIG. 1B**

ROTATIONAL INJECTION
MOLDING

**FIG. 1C**

BULK

**FIG. 2A**

**FIG. 2B**

CONTAINED GEOMETRIES

UPPER PLATE →

LOWER PLATE →

ONE PLATE ROTATING

**FIG. 3A**

UPPERMOLD
CAVITY

LOWER
MOLD
CAVITY

HALF MOLD CAVITY
ROTATING

**FIG. 3B**

1